(19) **Europäisches Patentamt / European Patent Office / Office européen des brevets**

(11) **EP 4 664 703 A1**

(12) **EUROPEAN PATENT APPLICATION**

(43) Date of publication:
**17.12.2025 Bulletin 2025/51**

(21) Application number: **25173265.7**

(22) Date of filing: **29.04.2025**

(51) International Patent Classification (IPC):
**H02J 3/01** (2006.01)    **H02J 3/18** (2006.01)

(52) Cooperative Patent Classification (CPC):
**H02J 3/1842; H02J 3/01**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **09.05.2024 US 202418659981**

(71) Applicant: **Ardagh Metal Packaging USA Corp.**
**Chicago, IL60631 (US)**

(72) Inventor: **AROUI, Nourredine**
**Chicago, Illinois 60656 (US)**

(74) Representative: **Samson & Partner Patentanwälte mbB**
**Widenmayerstraße 6**
**80538 München (DE)**

(54) **METHODS AND APPARATUS TO IMPROVE POWER FACTOR CORRECTION**

(57) Systems, apparatus, articles of manufacture, and methods are disclosed to improve power factor correction. An example apparatus includes a first power factor correction capacitor coupled to a load via a power distribution system; a controller to control the first power factor correction capacitor; and an active harmonic filter coupled to the load via the power distribution system, the active harmonic filter including a second power factor correction capacitor.

**FIG. 1**

## Description

FIELD OF THE DISCLOSURE

This disclosure relates generally to power factor correction and, more particularly, to methods and apparatus to improve power factor correction.

BACKGROUND

The power factor of an alternating current (AC) power system is a ratio of the real power absorbed by a load (e.g., the systems, devices, and/or circuitry that obtain and/or utilize the power from a utility company) to an apparent power flowing in the circuitry. Real power is the average of the instantaneous product of voltage and current and represents the capacity of the electricity for performing work. The apparent power is the product of the root mean square current multiplied by the root mean square voltage of the input line into the system. Power factor correction increases the power factor of a load, thereby improving efficiency for the distribution system.

BRIEF DESCRIPTION OF THE DRAWINGS

FIG. 1 is a block diagram of an example environment in which an example system operates to improve power factor correction.
FIG. 2 is a block diagram of an example implementation of the power factor controller of FIG. 1.
FIG. 3 is a block diagram of an example implementation of the hybrid correction controller of FIG. 1.
FIGS. 4A-4D illustrate current signals corresponding to the system of FIG. 1.
FIGS. 5-6 are flowcharts representative of example machine readable instructions and/or example operations that may be executed, instantiated, and/or performed by example programmable circuitry to implement the PFC controller and/or the hybrid correction controller of FIGS. 2 and/or 3.
FIG. 7 is a block diagram of an example processing platform including programmable circuitry structured to execute, instantiate, and/or perform the example machine readable instructions and/or perform the example operations of FIGS. 5-6 to implement the PFC controller and/or the hybrid correction controller of FIGS. 2 and/or 3.

In general, the same reference numbers will be used throughout the drawing(s) and accompanying written description to refer to the same or like parts. The figures are not necessarily to scale. Instead, the thickness of the layers or regions may be enlarged in the drawings. Although the figures show layers and regions with clean lines and boundaries, some or all of these lines and/or boundaries may be idealized. In reality, the boundaries and/or lines may be unobservable, blended, and/or irregular.

DETAILED DESCRIPTION

Systems, facilities, etc. require power from a utility service provider to operate. Devices with capacitance utilize reactive power (e.g., kilovolt amperes reactive (KVAR)) to operate and devices with resistance utilize active power (e.g., kilowatts (KW)). Reactive power corresponds to the power to produce magnetic fields for equipment operation that does not produce real work (e.g., such as equipment with capacitance). For example, sump pumps need both KW and KVAR to operate, while lights need only KW to operate. After the system, facility, etc. installs equipment for the KVAR, the system, facility, etc. does not need to pay the utility service provider for the KVAR. When additional equipment (e.g., a capacitor) is added to a system or facility, the system may generate reactive power to use for the equipment. When KW is needed, the system, facility, and/or an administrator requests power (e.g., voltage and/or current) from the utility service provider.

The quality of the power of the signals into a system (defined by the power factor) from a utility provider impacts power distribution system, equipment, and/or service costs. The power factor corresponds to how effectively the power distribution system consumes electricity to produce real work. For example, a low power factor and/or high levels of harmonic currents can negatively affect power distribution system, equipment, and/or service cost. When a system needs power from a utility, the system or an administrator can request the utility service provider to provide power to the system. The utility charges the system based on the power factor of the provided power, which is a ratio of the real power to the reactive power. When capacitors are added to provide reactive power, the power factor increases, thereby increasing the efficiency of the power distribution.

Power factor (PF) is the ratio of real or active power (P) to total or apparent power (Sn), such that $PF=P/Sn=\cos\theta$. For a completely resistive load, the power factor would be "1" (e.g., real power, P, is equal to apparent power, Sn). For loads including reactive loads (e.g., that include capacitance), the power factor may be less than "1", with reactive loads resulting in a lagging power factor (where the current waveform lags the voltage waveform, and capacitive loads resulting in a leading, or "negative" power factor (i.e., cos-$\theta$, where the current waveform leads the voltage waveform).

The system power factor is nearly always positive and less than unity for loads of electrical power distribution systems, unless power factor correction techniques are applied. A low system power factor is problematic. For example, the lower the power factor, the higher the system current level needed to produce a given amount of real power (kW). Additionally, higher current levels result in higher distribution system power losses, larger voltage drops, loss of system capacity, heating of equipment (which can result in shorter life of the equipment), etc. Additionally, a lower power factor can result in increased utility costs. For example, service utility providers may charge a penalty when the power factor is below a threshold.

Power factor correction systems add or subtract reactive power (e.g., KVAR) to increase the power factor of a system. Capacitance (e.g., generated by power factor correction capacitors) provides reactive power (e.g., KVAR) to reduce the reactive power load demanded by capacitive loads in the system, thereby increasing the power factor. As further described below, examples disclosed herein provide a power factor correction protocol for dynamically reducing the power factor by providing reactive power (e.g., KVAR) and harmonic filtering based on measurements of the system.

Additionally, another factor in power quality is the level of harmonic currents. If the load is nonlinear, the amount of current drawn from the utility service provider becomes non-sinusoidal at frequencies that are multiples of the fundamental frequency of the system. Such currents are referred to as harmonic currents. Harmonic currents generated by non-linear loads distort the current waveform. Additionally, harmonic currents increase root mean square (RMS) current levels and deteriorate the quality of the voltage supplied by the utility service provider, thereby leading to overheating of components. Overheating of components reduces the life of components and reduces system capacity.

Harmonic filtering techniques can be applied to reduce harmonic currents in the currents applied to a load. In general, lower harmonics create more distortion in the input signal than higher harmonics. The active harmonic filter disclosed herein eliminates the lowest N harmonics (e.g., the 1st-51st harmonics). For example, the system components may cause harmonics that create distortion(s) (e.g., perturbation(s)) and change the sinusoidal wave of the input current provided by the utility service provider. The harmonics may affect (e.g., distort, zero out, delete, adjust, etc.) a part of the sinusoidal wave input from the service utility provider. The active harmonic filter disclosed herein generates a signal that corresponds to a missing part of the sinusoid due to harmonics. The active harmonic filter adds the generated signal into the input signal. Adding the generated signal to the input signal reduces and/or eliminates the distortions in the input signal so that the input signal provided to a load has a lower or no distortion. Accordingly, examples disclosed herein detect distortions caused by harmonics (e.g., the 1st-51st harmonics) and create signals to mitigate the distortions in the sinusoidal signal. By correcting the harmonics, less current is used from the service utility provider, thereby reducing consumption and cost. Additionally, by reducing harmonic distortion, the lifespan of equipment is increased.

Although power factor correction circuitry and active harmonic filters can increase the power factor (e.g., to 95-98%), there may still be, in some circumstances (where larger KVAR is needed), 3-5% power factor inefficiency. Accordingly, examples disclosed herein implement power factor correction capacitor(s) in the active harmonic filter to perform additional power factor correction. The additional capacitor(s) add additional capacitance to further reduce the power factor by adding reactive power to the system. Examples disclosed herein include a controller to monitor the input signal(s) and conditions on the load to determine how to control the power factor correction capacitors (e.g., by sending a control signal to cause the power factor correction capacitors to output a particular amount of KVAR) in the power factor correction circuitry and the active harmonic filter to increase the power factor.

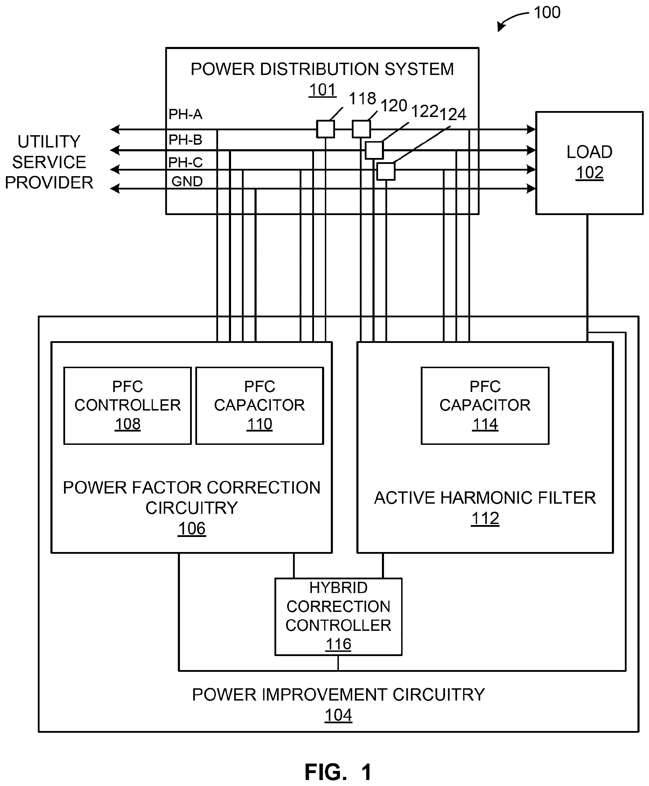

FIG. 1 is a block diagram of an example system 100 to improve power factor correction. The system 100 includes an example power distribution system 101, an example load 102, and example power improvement circuitry 104. The power improvement circuitry 104 includes an example power factor correction circuitry 106, which includes power factor correction (PFC) controller 108 and an example PFC capacitor 110. The power improvement circuitry 104 also includes an example active harmonic filter 112, an example PFC capacitor 114, and an example hybrid correction controller 116. The power distribution system 101 includes current transformers 118, 120, 122, 124.

The power distribution system 101 connects the utility service provider to the load 102. The utility service provider provides power to the load 102 by providing a current and voltage. In the example of FIG. 1, the utility service provider provides three phases (e.g., PH-A, PH-B, PH-C) of power. However, the utility service provider can provide any number of signals at any number of phases. The load 102 is a number of devices (e.g., electrical devices) that operate using the power provided by the service utility provider. As further described below, the power improvement circuitry 104 gathers voltage and/or current samples (e.g., via the transformers 118, 120, 122, 124) to monitor and/or adjust power factor characteristics.

The power improvement circuitry 104 of FIG. 1 monitors the input current and the conditions of the load 102 to determine whether and/or how to adjust power factor correction and/or to generate a signal to mitigate and/or reduce the effects of the 1st-51st harmonics.

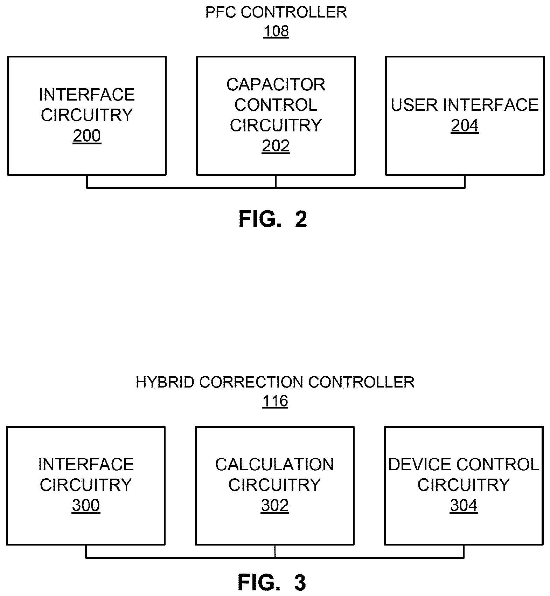

The power factor correction circuitry 106 of FIG. 1 monitors the input current, via connections to the power distribution system 101, and the load 102 to determine when to perform power factor correction by controlling the PFC capacitor 110 (e.g., sending a signal to the PFC capacitor 110 to control the amount of KVAR to add to the load 102). The power factor correction circuitry 106 includes the PFC controller 108, which obtains input current information from the power distribution system 101 (e.g., via the current transformer 118). The PFC controller 108 monitors and/or regulates the power factor by controlling the PFC capacitor 110 to add an amount of reactive power appropriate to mitigate the power factor. When the PFC capacitor 110 is in a detuned, sleep, or low power mode, the PFC capacitor 110 does not add (e.g., inject, provide, mix, etc.) reactive power into the input signal from the utility service provider. When the PFC capacitor 110 is not in a detuned, sleep, or low power mode, the PFC capacitor 110 adds (e.g., injects, increases, provides, etc.) reactive power into the input signal provided to the load 102 to increase the power factor of the input signal. The amount of reactive power (e.g., KVAR) that the PFC capacitor 110 adds is based on the control signal from the PFC controller 108. The PFC controller 108 monitors (e.g., polls) data related to the current and/or load 102 according to a polling frequency defined by a step size, which may be user defined. The PFC controller 108 can set a current transformer (CT) value (e.g., a CT ratio) that determines how to control the PFC capacitor 110. The CT value could be user selected and/or based on an error measured at the load 102 (e.g., a comparison of the load 102 to what is expected at the load 102). Initially, the PFC controller 108 runs an initiation protocol to perform PFC correction. However, after a duration of time, the hybrid correction controller 116 may instruct the PFC controller 108 to adjust control of the PFC capacitor 110 based on measurements of the load 102 and/or operation of the active harmonic filter 112, as further described below. The PFC controller 108 is further described below in conjunction with FIG. 2.

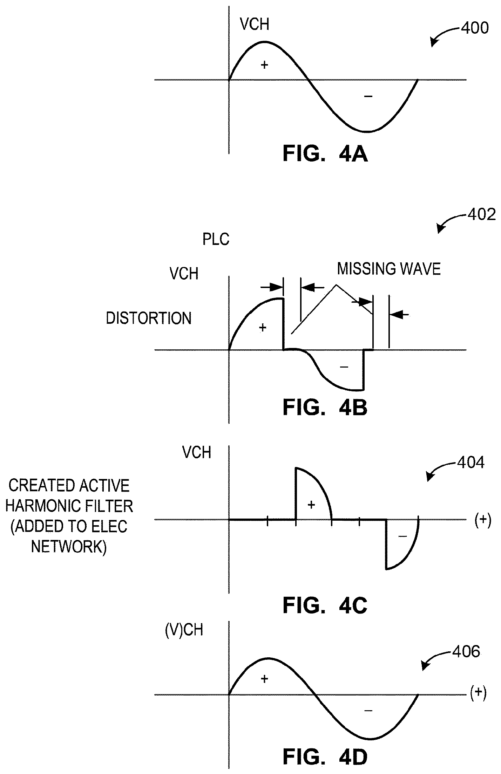

The active harmonic filter 112 of FIG. 2 measures distortions (e.g., deviations, perturbations, etc.) from the intended sinusoidal input signal due to harmonics and generates a signal that can be added (e.g., provided, mixed with, etc.) into the input signal to eliminate and/or reduce the deviations. For example, the active harmonic filter 112 monitors the input sinusoidal signal(s) from the utility service provider and determines if and how the sinusoidal signal(s) deviated (e.g., is distorted relative to) from the ideal sinusoidal form. After the deviation is determined, the active harmonic filter 112 generates a signal to add into the input signal to mitigate the deviation. The active harmonic filter 112 eliminates the effects of the 1st -51st harmonics by adding the generated signal to mitigate the measured deviations in the input signal. An example of a signal that is altered due to harmonics and adjusted by the active harmonic filter 112 is further described below in conjunction with FIG. 4. In some examples, the active harmonic filter 112 measures and/or determines the RMS value of the harmonic voltages and/or harmonic currents of the input voltage and current signals from the service utility provider based on the currents and/or voltages measured at the power distribution system 101 and/or the load 102. As further described below, the active harmonic filter 112 can provide the RMS values to the hybrid correction controller 116 for determining different characteristics of the signals from the utility service provider.

Additionally, the activate harmonic filter 112 of FIG. 1 includes the PFC capacitor 114. The PFC capacitor 114 can further add reactive power (e.g., KVAR) to the input signal applied to the load 102 based on a control signal from the hybrid correction controller 116. The PFC capacitor 114, when operating, adds additional reactive power into the load 102 to increase the power factor. For example, the PFC capacitor 114 may apply additional power factor correction when the PFC generated by the PFC capacitor 110 results in a power factor below a threshold. The PFC capacitor 114 may be smaller than the PFC capacitor 110. Control of the PFC capacitor 114 is based on one or more signals from the hybrid correction controller 116.

The hybrid correction controller 116 of FIG. 1 collects information from the power distribution system 101 (e.g., directly and/or via the power factor correction circuitry 106 and/or the active harmonic filter 112) and the load 102 and controls (e.g., outputs control signals to) the power factor correction circuitry 106 and/or the active harmonic filter 112. For example, the hybrid correction controller 116 determines the reactive power of the compensation equipment (Qc) (e.g., the PFC capacitor(s) 110, 114) and the apparent power (Sn) of the transformer that provides the power from the utility service provider based on the current measurement from the current transformer 118 and the voltage measurement from the power distribution system 101. For example, the hybrid correction controller 116 can use the below system of equations to solve for the reactive power (Qc) and the apparent power of the transformer (Sn)

$$P = \sqrt{3} * V * I_{PH_A} * PF * efficiency_{load} \text{ (Equation 1)}$$

$$S_n = V * I_{PH_A} \text{ (Equation 2)}$$

$$S_n{}^2 = P^2 * Qc^2 \text{ (Equation 3)}$$

In the above Equations 1-3, P is the active power and/or total power of the system, V is the input voltage from the utility service provider, $I_{PH_A}$ is the current measured by the current transformer 118, and efficiency is assumed to be 100%.

After the hybrid correction controller 116 determines the Qc and Sn, the hybrid correction controller 116 determines a ratio of Qc/Sn. The hybrid correction controller 116 compares the ratio to a threshold to determine how to control the power factor correction circuitry 106 and/or the active harmonic filter 112. For example, if the Qc/Sn ratio is below the threshold (e.g., 20%), the hybrid correction controller 116 causes the power factor correction circuitry 106 and/or the active harmonic filter 112 to operate in a detuned mode. In the detuned mode, the power factor correction circuitry 106 and/or the active harmonic filter 112 are disabled or operating in a sleep mode to not output reactive power to provide power factor correction. If the hybrid correction controller 116 determines that the Qc/Sn ratio is above the threshold, the hybrid correction controller 116 performs further analysis to determine how to continue operation, as further described below.

If the Qc/Sn ratio is above the threshold, the hybrid correction controller 116 of FIG. 1 determines the total current demand distortion (TDDi) and the total harmonic voltage distortion (THD(V)) based on the current measurements via one or more of the current transformers 118-124 and/or voltage measurements. The TDDi is the harmonic current distortion against the full load level. The THD(V) is measured at the power distribution system 101 at maximum load without capacitors in the load 102. The hybrid correction controller 116 can determine the TDDi using the below Equation 4 and the THD(V) using the below Equation 5.

$$TDD_i = \frac{\sqrt{I_2^2 + I_3^2 + I_4^2 + \cdots}}{I_1} \text{ (Equation 4)}$$

$$THD(V) = \frac{\sqrt{V_2^2 + V_3^2 + V_4^2 + \cdots}}{V_1} \text{ (Equation 5)}$$

In the above Equations 4 and 5, $I_n$ is the RMS current of the nth harmonic, $I_1$ is the RMS current of the fundamental frequency, $V_n$ is the RMS current of the nth harmonic, and $V_1$ is the RMS voltage of the fundamental frequency.

After the hybrid correction controller 116 of FIG. 1 determines the TDDi and the TDH(V), the hybrid correction controller 116 compares the TDDi to a first threshold (e.g., 8%) and compares the TDH(V) to a second threshold (e.g., 3%). If the TDDi is below the first threshold and the THD(V) is below the second threshold, the hybrid correction controller 116 sends out signal(s) to operate in a standard mode. In the standard mode, the PFC controller 108 sends a control signal to the PFC capacitor 110 to add reactive power to increase the power factor. The amount of reactive power depends on the determined power factor. If the TDDi is above the first threshold or the THD(V) is above the second threshold, the hybrid correction controller 116 compares the TDDi and the THD(V) to a third and fourth threshold. For example, the hybrid correction controller 116 determines if the TDDi is below a third threshold (e.g., 20%) and if the TDH(V) is below a fourth threshold (e.g., 7%). If the TDDi is below the third threshold and the TDH(V) is below the fourth threshold, the hybrid correction controller 116 enters into the detuned mode. If the TDDi is above the third threshold or the TDH(V) is above the fourth threshold, the hybrid correction controller 116 enters into the active filters mode. In the active filters mode, the hybrid correction controller 116 transmits signal(s) to the PFC circuitry 106 and the active harmonic filter 112 to cause the PFC capacitors 110, 114 to output additional reactive power and to cause the active harmonic filter 112 to perform active harmonic filtering. The hybrid correction controller 116 is further described below in conjunction with FIG. 3.

FIG. 2 is a block diagram of an example implementation of the PFC controller 108 of FIG. 1 to initialize control of the PFC capacitor 110. The PFC controller 108 of FIG. 2 may be instantiated (e.g., creating an instance of, bring into being for any length of time, materialize, implement, etc.) by programmable circuitry such as a Central Processor Unit (CPU) executing first instructions. Additionally or alternatively, the PFC controller 108 of FIG. 2 may be instantiated (e.g., creating an instance of, bring into being for any length of time, materialize, implement, etc.) by (i) an Application Specific Integrated Circuit (ASIC) and/or (ii) a Field Programmable Gate Array (FPGA) structured and/or configured in response to execution of second instructions to perform operations corresponding to the first instructions. It should be understood that some or all of the circuitry of FIG. 2 may, thus, be instantiated at the same or different times. Some or all of the circuitry of FIG. 2 may be instantiated, for example, in one or more threads executing concurrently on hardware and/or in series on hardware. The PFC controller 108 includes example interface circuitry 200, example capacitor control circuitry 202, and an example user interface 204.

The interface circuitry 200 of FIG. 2 obtains information from the power distribution system 101, the current transformer 118, the load 102, and/or the hybrid correction controller 116. For example, the interface circuitry 200 can obtain a voltage and/or current from the power distribution system and/or current transformer 118, information regarding the current, voltage, and/or power factor from the load 102, and/or instructions from the hybrid correction controller 116. Additionally, the interface circuitry 200 can output one or more signals to control the PFC capacitor 110 to add reactive power to the load 102 to increase the power factor.

The capacitor control circuitry 202 of FIG. 2 generates one or more signals to control the PFC capacitor 110 during standard operation and/or initial operation (e.g., before the hybrid correction controller 116 controls the active harmonic filter 112). For example, during an initial operation, the capacitor control circuitry 202 obtains a step size and CT ratio. As described above, the step size corresponds to the frequency of polling of data (e.g., current, voltage, and/or data from the load 102) and/or determining of characteristics of the input signal based on the polled data. The CT ratio is a threshold value corresponding to when the capacitor control circuitry 202 will output a signal to control the PFC capacitors 110 of FIG. 1 to output a particular amount of reactive power based on the CT ratio and/or the power factor. Additionally, the capacitor control circuitry 202 can determine when to reset a count corresponding to the step size when a new CT ratio is obtained. The CT ratio may be obtained from a user (e.g., via the user interface 204) or may be determined based on the conditions of the load 102. In some examples, instead of using a CT ratio, a power transform ratio (PT ratio) may be used because the current corresponds to the power. Additionally, the capacitor control circuitry 202 can control the PFC capacitor 110 based on a signal from the hybrid correction controller 116.

The user interface 204 of FIG. 2 obtains information from a user. For example, the user interface 204 can display a prompt related to the desired CT ratio and/or step size. The user interacts with the user interface 204 to obtain the user selected CT ratio and/or step size. The user interface 204 provides the user selections to the capacitor control circuitry 202.

FIG. 3 is a block diagram of an example implementation of the hybrid correction controller 116 of FIG. 1 to control the PFC capacitors 110, 114 and/or the active harmonic filter 112. The hybrid correction controller 116 of FIG. 3 may be instantiated (e.g., creating an instance of, bring into being for any length of time, materialize, implement, etc.) by programmable circuitry such as a Central Processor Unit (CPU) executing first instructions. Additionally or alternatively, the PFC controller 108 of FIG. 3 may be instantiated (e.g., creating an instance of, bring into being for any length of time, materialize, implement, etc.) by (i) an Application Specific Integrated Circuit (ASIC) and/or (ii) a Field Programmable Gate Array (FPGA) structured and/or configured in response to execution of second instructions to perform operations corresponding to the first instructions. It should be understood that some or all of the circuitry of FIG. 3 may, thus, be instantiated at the same or different times. Some or all of the circuitry of FIG. 3 may be instantiated, for example, in one or more threads executing concurrently on hardware and/or in series on hardware. The hybrid correction controller 116 includes example interface circuitry 300, example calculation circuitry 302, and example device control circuitry 304.

The interface circuitry 300 of FIG. 3 obtains samples (e.g., current measurements, voltage measurements, etc.) and/or determined information from the power factor correction circuitry 106 and/or the active harmonic filter 112. Additionally, the interface circuitry 300 can obtain information related to the load 102. Additionally, the interface circuitry 300 can output signals to control the power factor correction circuitry 106 and/or the active harmonic filter 112.

The calculation circuitry 302 of FIG. 3 calculates various ratios and values that are used by the device control circuitry 304 to make decisions regarding the control of the power factor correction circuitry 106 and/or the active harmonic filter 112. For example, the calculation circuitry 302 determines a ratio of Qc and Sn (Qc/Sn). In some examples, the calculation circuitry 302 determines the Qc and Sn values based on the above-Equations 1-3. Additionally, the calculation circuitry 302 determines the TDDi using the above Equation 4. Additionally, the calculation circuitry 302 determines the THD(V) using the above Equation 5. The current samples, voltage samples, and/or the power factor from Equations 1-3 may be obtained via the load 102, the power factor correction circuitry 106, and/or the active harmonic filter 112. In some examples, the hybrid correction controller 116 can access the current and/or voltage samples directly from the power distribution system 101 and/or determine the power factor based on data from the load 102.

The device control circuitry 304 of FIG. 3 determines how to control the power factor correction circuitry 106 and/or the active harmonic filter 112 based on the results of the calculation circuitry 302. For example, if the Qc/Sn satisfies (e.g., is greater than) a threshold (e.g., 20%), the device control circuitry 304 outputs a signal to the power factor correction circuitry 106 and/or the active harmonic filter 112 to enter into a detuned or lower power mode where the PFC capacitors 110, 114 are disabled and the active harmonic filter 112 is not adding current into the power distribution system 101. If the Qc/Sn ratio does not satisfy the threshold, the device control circuitry 304 compares the TDDi to a first threshold (e.g., 8%) and compares the TDH(V) to a second threshold (e.g., 3%). If the TDDi is below the first threshold and the THD(V) is below the second threshold, the hybrid correction controller 116 sends out signal(s) to operate in a standard mode. In the standard mode, the device control circuitry 304 outputs a control signal to cause the PFC capacitor 110 to add reactive power to increase the power factor. If the TDDi is above the first threshold or the THD(V) is above the second threshold, the device control circuitry 304 compares the TDDi and the THD(V) to a third and fourth threshold. For example, the device control circuitry 304 determines if the TDDi is below a third threshold (e.g., 20%) and if the TDH(V) is below a fourth threshold (e.g., 7%). If the TDDi is below the third threshold and the TDH(V) is below the fourth threshold, the device control circuitry 304 enters into the detuned mode. If the TDDi is above the third threshold or the TDH(V) is above the fourth threshold, the device control circuitry 304 enters into the active filters mode. As described above, in the active filters mode, the device control circuitry 304 transmits signal(s) (e.g., via the interface circuitry 300) to the PFC circuitry 106 and the active harmonic filter 112 to output a control signal the PFC capacitors 110, 114 to output a particular amount of reactive power and to cause the active harmonic filter 112 to perform active harmonic filtering.

FIGS. 4A-4D illustrate example current signals 400, 402, 404, 406 corresponding to the techniques performed by the active harmonic filter 112 of FIG. 1. The current signal 400 corresponds to the current signal output by the utility service provider. The current signal 402 corresponds to a current signal from the utility service provider that has been affected by distortions caused by harmonics. The current signal 404 corresponds to a signal generated by the active harmonic filter 112 to mitigate the distortions introduced by harmonics. The current signal 406 corresponds to the current signal 402 after the current signal 404 has been added into the current signal 402.

As described above, the signal 400 corresponds to the current signal output by the service utility provider to the load 102. The signal 400 is a sinusoidal signal that varies between a positive current and a negative current. Although the signal 400 output by the utility service provider is a sinusoid, harmonics caused by the components of the load 102 can generate distortions of the sinusoid signal 400, as shown in the signal 402. The active harmonic filter 112 monitors and identifies the distortions on the current signal 402. Based on the monitoring, the active harmonic filter 112 generates the current signal 404 which generates the current portions that have been adjusted due to the harmonics. The active harmonic filter 112 adds the signal 404 into the signal 402, resulting in the signal 406. The signal 406 is the signal that is applied to the load 102. Accordingly, the active harmonic filter 112 generates the signal 404 to ensure that the signal 406 into the load 102 is the same as the signal 400 generated by the utility service provider.

While an example manner of implementing the PFC controller 108 and/or the hybrid correction controller 116 of FIG. 1 is illustrated in FIGS. 2 and/or 3, one or more of the elements, processes, and/or devices illustrated in FIGS. 2 and/or 3 may be combined, divided, re-arranged, omitted, eliminated, and/or implemented in any other way. Further, the interface circuitry 200, the capacitor control circuitry 202, the user interface 204, the interface circuitry 300, the calculation circuitry 302, the device control circuitry 304 and/or, more generally, the example PFC controller 108 and/or the hybrid correction controller 116 of FIGS. 2 and/or 3, may be implemented by hardware alone or by hardware in combination with software and/or firmware. Thus, for example, any of the interface circuitry 200, the capacitor control circuitry 202, the user interface 204, the interface circuitry 300, the calculation circuitry 302, the device control circuitry 304 and/or, more generally, the example PFC controller 108 and/or the hybrid correction controller 116, could be implemented by programmable circuitry in combination with machine readable instructions (e.g., firmware or software), processor circuitry, analog circuit(s), digital circuit(s), logic circuit(s), programmable processor(s), programmable microcontroller(s), graphics processing unit(s) (GPU(s)), digital signal processor(s) (DSP(s)), ASIC(s), programmable logic device(s) (PLD(s)), and/or field programmable logic device(s) (FPLD(s)) such as FPGAs. Further still, the example PFC controller 108 and/or the hybrid correction controller 116 of FIGS. 2 and/or 3 may include one or more elements, processes, and/or devices in addition to, or instead of, those illustrated in FIGS. 2 and/or 3, and/or may include more than one of any or all of the illustrated elements, processes and devices.

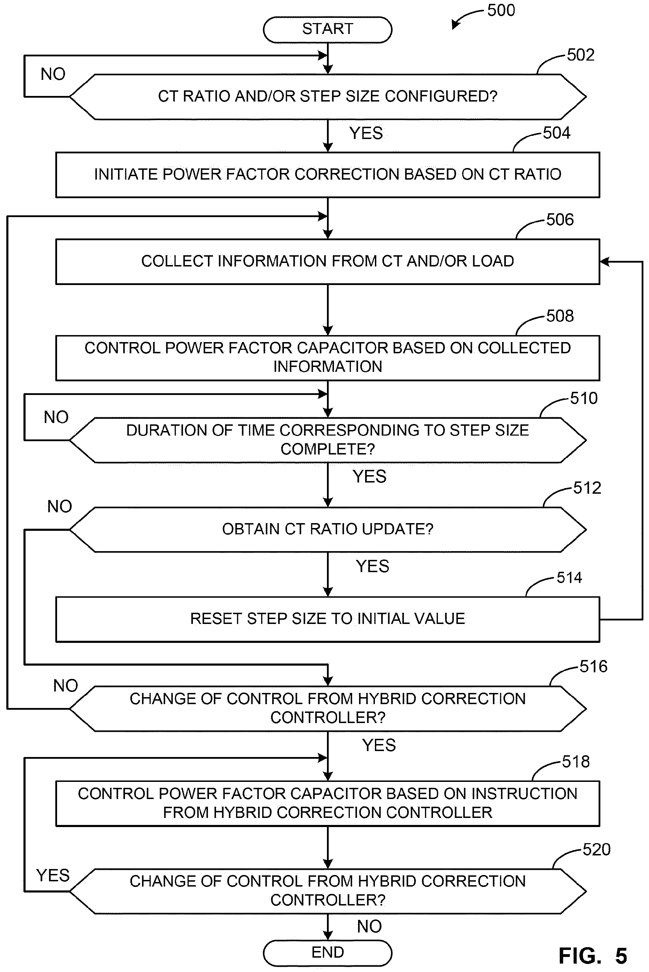

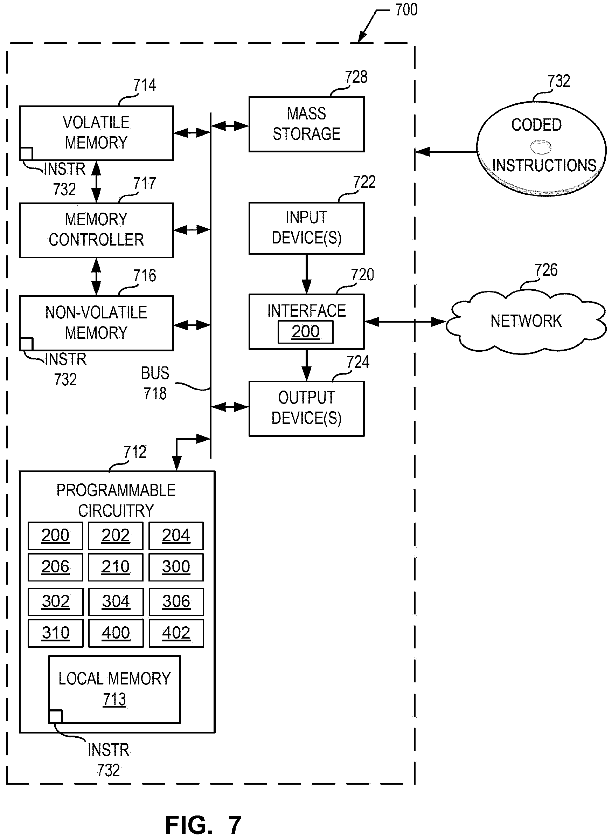

Flowchart(s) representative of example machine readable instructions, which may be executed by programmable circuitry to implement and/or instantiate the PFC controller 108 and/or the hybrid correction controller 116 of FIGS. 2 and/or 3 and/or representative of example operations which may be performed by programmable circuitry to implement and/or instantiate the PFC controller 108 and/or the hybrid correction controller 116 of FIGS. 2 and/or 3, are shown in FIGS. 5-6. The machine readable instructions may be one or more executable programs or portion(s) of one or more executable programs for execution by programmable circuitry such as the programmable circuitry 712 shown in the example processor platform 700 discussed below in connection with FIG. 7 and/or may be one or more function(s) or portion(s) of functions to be performed by programmable circuitry (e.g., an FPGA). In some examples, the machine readable instructions cause an operation, a task, etc., to be carried out and/or performed in an automated manner in the real world. As used herein, "automated" means without human involvement.

The program may be embodied in instructions (e.g., software and/or firmware) stored on one or more non-transitory computer readable and/or machine readable storage medium such as cache memory, a magnetic-storage device or disk (e.g., a floppy disk, a Hard Disk Drive (HDD), etc.), an optical-storage device or disk (e.g., a Blu-ray disk, a Compact Disk (CD), a Digital Versatile Disk (DVD), etc.), a Redundant Array of Independent Disks (RAID), a register, ROM, a solid-state drive (SSD), SSD memory, non-volatile memory (e.g., electrically erasable programmable read-only memory (EEPROM), flash memory, etc.), volatile memory (e.g., Random Access Memory (RAM) of any type, etc.), and/or any other storage device or storage disk. The instructions of the non-transitory computer readable and/or machine readable medium may program and/or be executed by programmable circuitry located in one or more hardware devices, but the entire program and/or parts thereof could alternatively be executed and/or instantiated by one or more hardware devices other than the programmable circuitry and/or embodied in dedicated hardware. The machine readable instructions may be distributed across multiple hardware devices and/or executed by two or more hardware devices (e.g., a server and a client hardware device). For example, the client hardware device may be implemented by an endpoint client hardware device (e.g., a hardware device associated with a human and/or machine user) or an intermediate client hardware device gateway (e.g., a radio access network (RAN)) that may facilitate communication between a server and an endpoint client hardware device. Similarly, the non-transitory computer readable storage medium may include one or more mediums. Further, although the example program is described with reference to the flowchart(s) illustrated in FIGS. 5-6, many other methods of implementing the example PFC controller 108 and/or the hybrid correction controller 116 may alternatively be used. For example, the order of execution of the blocks of the flowchart(s) may be changed, and/or some of the blocks described may be changed, eliminated, or combined. Additionally or alternatively, any or all of the blocks of the flow chart may be implemented by one or more hardware circuits (e.g., processor circuitry, discrete and/or integrated analog and/or digital circuitry, an FPGA, an ASIC, a comparator, an operational-amplifier (op-amp), a logic circuit, etc.)

structured to perform the corresponding operation without executing software or firmware. The programmable circuitry may be distributed in different network locations and/or local to one or more hardware devices (e.g., a single-core processor (e.g., a single core CPU), a multi-core processor (e.g., a multi-core CPU, an XPU, etc.)). For example, the programmable circuitry may be a CPU and/or an FPGA located in the same package (e.g., the same integrated circuit (IC) package or in two or more separate housings), one or more processors in a single machine, multiple processors distributed across multiple servers of a server rack, multiple processors distributed across one or more server racks, etc., and/or any combination(s) thereof.

The machine readable instructions described herein may be stored in one or more of a compressed format, an encrypted format, a fragmented format, a compiled format, an executable format, a packaged format, etc. Machine readable instructions as described herein may be stored as data (e.g., computer-readable data, machine-readable data, one or more bits (e.g., one or more computer-readable bits, one or more machine-readable bits, etc.), a bitstream (e.g., a computer-readable bitstream, a machine-readable bitstream, etc.), etc.) or a data structure (e.g., as portion(s) of instructions, code, representations of code, etc.) that may be utilized to create, manufacture, and/or produce machine executable instructions. For example, the machine readable instructions may be fragmented and stored on one or more storage devices, disks and/or computing devices (e.g., servers) located at the same or different locations of a network or collection of networks (e.g., in the cloud, in edge devices, etc.). The machine readable instructions may require one or more of installation, modification, adaptation, updating, combining, supplementing, configuring, decryption, decompression, unpacking, distribution, reassignment, compilation, etc., in order to make them directly readable, interpretable, and/or executable by a computing device and/or other machine. For example, the machine readable instructions may be stored in multiple parts, which are individually compressed, encrypted, and/or stored on separate computing devices, wherein the parts when decrypted, decompressed, and/or combined form a set of computer-executable and/or machine executable instructions that implement one or more functions and/or operations that may together form a program such as that described herein.

In another example, the machine readable instructions may be stored in a state in which they may be read by programmable circuitry, but require addition of a library (e.g., a dynamic link library (DLL)), a software development kit (SDK), an application programming interface (API), etc., in order to execute the machine-readable instructions on a particular computing device or other device. In another example, the machine readable instructions may need to be configured (e.g., settings stored, data input, network addresses recorded, etc.) before the machine readable instructions and/or the corresponding program(s) can be executed in whole or in part. Thus, machine readable, computer readable and/or machine readable media, as used herein, may include instructions and/or program(s) regardless of the particular format or state of the machine readable instructions and/or program(s).

The machine readable instructions described herein can be represented by any past, present, or future instruction language, scripting language, programming language, etc. For example, the machine readable instructions may be represented using any of the following languages: C, C++, Java, C#, Perl, Python, JavaScript, HyperText Markup Language (HTML), Structured Query Language (SQL), Swift, etc.

As mentioned above, the example operations of FIGS. 5-6 may be implemented using executable instructions (e.g., computer readable and/or machine readable instructions) stored on one or more non-transitory computer readable and/or machine readable media. As used herein, the terms non-transitory computer readable medium, non-transitory computer readable storage medium, non-transitory machine readable medium, and/or non-transitory machine readable storage medium are expressly defined to include any type of computer readable storage device and/or storage disk and to exclude propagating signals and to exclude transmission media. Examples of such non-transitory computer readable medium, non-transitory computer readable storage medium, non-transitory machine readable medium, and/or non-transitory machine readable storage medium include optical storage devices, magnetic storage devices, an HDD, a flash memory, a read-only memory (ROM), a CD, a DVD, a cache, a RAM of any type, a register, and/or any other storage device or storage disk in which information is stored for any duration (e.g., for extended time periods, permanently, for brief instances, for temporarily buffering, and/or for caching of the information). As used herein, the terms "non-transitory computer readable storage device" and "non-transitory machine readable storage device" are defined to include any physical (mechanical, magnetic and/or electrical) hardware to retain information for a time period, but to exclude propagating signals and to exclude transmission media. Examples of non-transitory computer readable storage devices and/or non-transitory machine readable storage devices include random access memory of any type, read only memory of any type, solid state memory, flash memory, optical discs, magnetic disks, disk drives, and/or redundant array of independent disks (RAID) systems. As used herein, the term "device" refers to physical structure such as mechanical and/or electrical equipment, hardware, and/or circuitry that may or may not be configured by computer readable instructions, machine readable instructions, etc., and/or manufactured to execute computer-readable instructions, machine-readable instructions, etc.

FIG. 5 is a flowchart representative of example machine readable instructions and/or example operations 500 that may be executed, instantiated, and/or performed by programmable circuitry to initiate control of the PFC capacitor 110 of the PFC circuitry 106 of FIG. 1. The example machine-readable instructions and/or the example operations 500 of FIG. 5 begin at block 502, at which the capacitor control circuitry 202 determines if the CT ratio and/or step size has been configured. As described above, the CT ratio corresponds to a threshold for control of the PFC capacitor 110 and the step size corresponds to the frequency of sampling the current, voltage, and/or load 102 for information. The CT ratio and/or step size may be obtained from a user via the user interface 204 and/or can be generated based on information corresponding to the load 102.

At block 504, the capacitor control circuitry 202 initiates the power factor correction based on the CT ratio (e.g., by controlling the PFC capacitors 110 based on the CT ratio). At block 506, the interface circuitry 200 collects information from the current transformer 118 and/or from the load 102. The information may include power factor determinations and/or current measurements. In some examples, the interface circuitry 200 also collects voltage measurements. In such examples, the capacitor control circuitry 202 can determine the power factor based on the voltage and/or current measurements. At block 508, the capacitor control circuitry 202 controls the power factor correction capacitor 110 based on the collected information (e.g., based on a current sample and the CT ratio). For example, the capacitor control circuitry 202 determines an amount of reactive power (e.g., KVAR) needed to mitigate and/or increase the power factor to or near 1. The capacitor control circuitry 202 then outputs a control signal to the PFC capacitor 110 to cause the PFC capacitor 110 to output the determined amount of reactive into the input signal provided to the load 102.

At block 510, the capacitor control circuitry 202 determines if a duration of time corresponding to the step size is complete. If the capacitor control circuitry 202 determines that the duration of time is not complete (block 510: NO), control returns to block 510 until the duration of time is complete. If the capacitor control circuitry 202 determines that the duration of time is complete (block 510: YES), the capacitor control circuitry 202 determines if the CT ratio was updated (block 512). For example, the user can select a new CT ratio via the user interface 204.

If the capacitor control circuitry 202 determines that an updated CT ratio was obtained (block 514: YES), the capacitor control circuitry 202 resets the step size to an initial value (block 516) and control returns to block 506 to reset normal operation under the updated CT ratio. If the capacitor control circuitry 202 determines that an updated CT ratio was not obtained (block 512: NO), the capacitor control circuitry 202 determines if there is a change of control from the hybrid correction controller 116 (block 516). For example, the hybrid correction controller 1616 may override control of the PFC controller 108 by outputting a control signal to the capacitor control circuitry 202 via the interface circuitry 200.

If the capacitor control circuitry 202 does not obtain a change of control signal from the hybrid correction controller 116 (block 516: NO), control returns to block 506. If the capacitor control circuitry 202 obtains a change of control signal from the hybrid correction controller 116 (block 516: YES), the capacitor control circuitry 202 controls the power factor correction capacitor 110 based on the instruction from the hybrid correction controller 116 (block 518). For example, the capacitor control circuitry 202 outputs a signal to the PFC capacitor 110 to cause the PFC capacitor to output a particular amount of reactive power based on the instruction from the hybrid correction controller 116. At block 520, the capacitor control circuitry 202 determines if a change in control from the hybrid controller 516 has been obtained via the interface circuitry 200. If the capacitor control circuitry 202 determines if a change in control has been obtained from the hybrid correction controller 116 via the interface circuitry 200. If the capacitor control circuitry 202 determines that a change in control has not been obtained (block 520: NO), the instructions end. If the capacitor control circuitry 202 determines that a change in control has been obtained (block 520: YES), control returns to block 518 to implement the updated control.

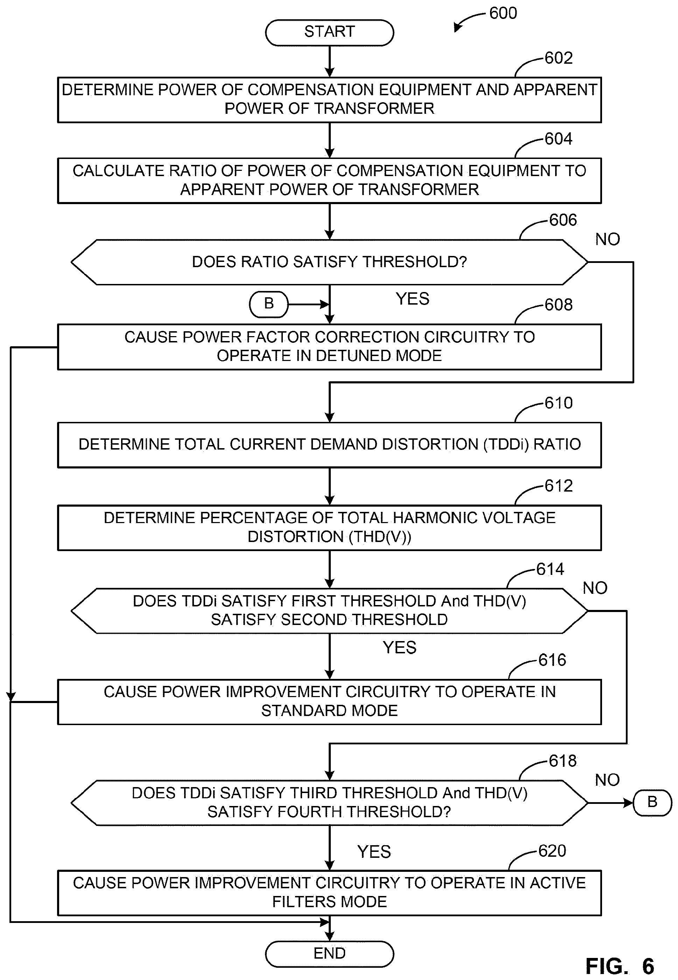

FIG. 6 is a flowchart representative of example machine readable instructions and/or example operations 600 that may be executed, instantiated, and/or performed by programmable circuitry to initiate control of the PFC capacitors 110, 114 and/or the active harmonic filter 112 of FIG. 1. The example machine-readable instructions and/or the example operations 600 of FIG. 6 begin at block 602, at which the calculation circuitry 302 determines the reactive power (Qc) and the apparent power of the transformer from the service utility provider (Sn). For example, the calculation circuitry 302 uses the above Equations 1-3 to determine the reactive power (Qc) of the compensation equipment and the apparent power of the transformer from the service utility provider (Sn). The interface circuitry 300 may obtain the voltage and/or current for use in Equations 1-3 from the power distribution system 101 (e.g., directly and/or via the power factor correction circuitry 106 and/or the active harmonic filter 112). Additionally, in some examples, the interface circuitry 300 may obtain the power factor for application into Equations 1-3 from the power factor correction circuitry 106 and/or the load 102. In some examples, the calculation circuitry 302 determines the power factor.

At block 604, the calculation circuitry 302 calculates a ratio of the reactive power to the apparent power of the transformer (e.g., Qc/Sn). At block 606, the device control circuitry 304 determines if the ratio satisfies a threshold (e.g., is greater than 20%). If the device control circuitry 304 that the ratio satisfies the threshold (block 606: YES), the device control circuitry 304 causes the power factor correction circuitry 106 to operate in the detuned mode (block 608). For example, the device control circuitry 304 outputs a signal to cause the power factor correction circuitry 106 to disable the PCF capacitor 110 (e.g., instruct the PCF capacitor 110 to not output reactive power (e.g., KVAR) to the load 102) and/or operate in a lower power mode. In some examples, the power factor correction circuitry 106 can verify the measurements and/or calculations of the calculation circuitry 302 prior to entering the detuned mode to ensure that the detuned mode is appropriate.

If the device control circuitry 304 that the ratio does not satisfy the threshold (block 606: NO), the calculation circuitry 302 determines the total current demand distortion ratio (e.g., TDDi) (block 610). For example, the calculation circuitry 302 can determine the total current demand distortion ratio using the above Equation 4, as further described above in conjunction with FIG. 1. In some examples, the calculation circuitry 302 may obtain the RMS of the current harmonics for Equation 4 from the active harmonic filter 112. In some examples, the interface circuitry 300 can obtain current measurements from the current transformers 120-124 and the calculation circuitry 302 determines the RMS of the current harmonics directly.

At block 612, the calculation circuitry 302 determines the percentage of the total harmonic voltage distortion (e.g., THD(V)). For example, the calculation circuitry 302 can determine the total harmonic voltage distortion using the above Equation 5, as further described above in conjunction with FIG. 1. In some examples, the calculation circuitry 302 may obtain the RMS of the voltage harmonics for Equation 4 from the active harmonic filter 112. In some examples, the interface circuitry 300 can obtain voltage measurements from nodes of the power distribution system 101 of FIG. 1 and the calculation circuitry 302 determines the RMS of the voltage harmonics directly.

At block 614, the device control circuitry 304 determines if the TDDi satisfies a first threshold (e.g., is less than 8%) and if the THD(V) satisfies a second threshold (e.g., is less than 3%). If the device control circuitry 304 determines that the TDDi satisfies the first threshold and the THD(V) satisfies the second threshold (block 614: YES), the device control circuitry 304 causes the power factor correction circuitry 106 to operate in the standard mode (block 616). As described above, standard mode includes enabling the PFC capacitor 110 of FIG. 1 to improve the power factor. If the device control circuitry 304 determines that at least one of the TDDi does not satisfy the first threshold or the THD(V) does not satisfy the second threshold (block 614: NO), the device control circuitry 304 determines if the TDDi satisfies a third threshold (e.g., is less than 20%) and if the THD(V) satisfies a fourth threshold (e.g., is less than 7%) (block 618).

If the device control circuitry 304 determines that the TDDi satisfies the third threshold and the THD(V) satisfies the fourth threshold (block 618: YES), the device control circuitry 304 causes the power factor correction circuitry 106 to in active filters mode (block 616). As described above, active filters mode includes enabling the PFC capacitors 110, 114 of FIG. 1 and/or enabling the active harmonic filter 112 to improve the power factor. If the device control circuitry 304 determines that at least one of the TDDi does not satisfy the third threshold or the THD(V) does not satisfy the fourth threshold (block 618: NO), control returns to block 608 to cause the power factor correction circuitry to operate in the detuned mode.

FIG. 7 is a block diagram of an example programmable circuitry platform 700 structured to execute and/or instantiate the example machine-readable instructions and/or the example operations of FIGS. 5-6 to implement the PFC controller 108 and/or the hybrid correction controller 116 of FIGS. 2 and/or 3. The programmable circuitry platform 700 can be, for example, a server, a personal computer, a workstation, a self-learning machine (e.g., a neural network), a mobile device (e.g., a cell phone, a smart phone, a tablet such as an iPad™), a personal digital assistant (PDA), an Internet appliance, or any other type of computing and/or electronic device.

The programmable circuitry platform 700 of the illustrated example includes programmable circuitry 712. The programmable circuitry 712 of the illustrated example is hardware. For example, the programmable circuitry 712 can be implemented by one or more integrated circuits, logic circuits, FPGAs, microprocessors, CPUs, GPUs, DSPs, and/or microcontrollers from any desired family or manufacturer. The programmable circuitry 712 may be implemented by one or more semiconductor based (e.g., silicon based) devices. In this example, the programmable circuitry 712 implements the interface circuitry 200, the capacitor control circuitry 202, the user interface 204, the interface circuitry 300, the calculation circuitry 302, and/or the device control circuitry 304 of FIGS. 2 and/or 3.

The programmable circuitry 712 of the illustrated example includes a local memory 713 (e.g., a cache, registers, etc.). The programmable circuitry 712 of the illustrated example is in communication with main memory 714, 716, which includes a volatile memory 714 and a non-volatile memory 716, by a bus 718. The volatile memory 714 may be implemented by Synchronous Dynamic Random Access Memory (SDRAM), Dynamic Random Access Memory (DRAM), RAMBUS® Dynamic Random Access Memory (RDRAM®), and/or any other type of RAM device. The non-volatile memory 716 may be implemented by flash memory and/or any other desired type of memory device. Access to the main memory 714, 716 of the illustrated example is controlled by a memory controller 717. In some examples, the memory controller 717 may be implemented by one or more integrated circuits, logic circuits, microcontrollers from any desired family or manufacturer, or any other type of circuitry to manage the flow of data going to and from the main memory 714, 716.

The programmable circuitry platform 700 of the illustrated example also includes interface circuitry 720. The interface circuitry 720 may be implemented by hardware in accordance with any type of interface standard, such as an Ethernet interface, a universal serial bus (USB) interface, a Bluetooth® interface, a near field communication (NFC) interface, a Peripheral Component Interconnect (PCI) interface, and/or a Peripheral Component Interconnect Express (PCIe) interface.

In the illustrated example, one or more input devices 722 are connected to the interface circuitry 720. The input device(s) 722 permit(s) a user (e.g., a human user, a machine user, etc.) to enter data and/or commands into the programmable circuitry 712. The input device(s) 722 can be implemented by, for example, an audio sensor, a microphone, a camera (still or video), a keyboard, a button, a mouse, a touchscreen, a trackpad, and/or a voice recognition system.

One or more output devices 724 are also connected to the interface circuitry 720 of the illustrated example. The output device(s) 724 can be implemented, for example, by display devices (e.g., a light emitting diode (LED), an organic light emitting diode (OLED), a liquid crystal display (LCD), a cathode ray tube (CRT) display, an in-place switching (IPS) display, a touchscreen, etc.), a tactile output device, a printer, and/or speaker. The interface circuitry 720 of the illustrated example, thus, typically includes a graphics driver card, a graphics driver chip, and/or graphics processor circuitry such as a GPU.

The interface circuitry 720 of the illustrated example also includes a communication device such as a transmitter, a receiver, a transceiver, a modem, a residential gateway, a wireless access point, and/or a network interface to facilitate exchange of data with external machines (e.g., computing devices of any kind) by a network 726. The communication can be by, for example, an Ethernet connection, a digital subscriber line (DSL) connection, a telephone line connection, a coaxial cable system, a satellite system, a beyond-line-of-sight wireless system, a line-of-sight wireless system, a cellular telephone system, an optical connection, etc.

The programmable circuitry platform 700 of the illustrated example also includes one or more mass storage discs or devices 728 to store firmware, software, and/or data. Examples of such mass storage discs or devices 728 include magnetic storage devices (e.g., floppy disk, drives, HDDs, etc.), optical storage devices (e.g., Blu-ray disks, CDs, DVDs, etc.), RAID systems, and/or solid-state storage discs or devices such as flash memory devices and/or SSDs.

The machine readable instructions 732, which may be implemented by the machine readable instructions of FIGS. 5-6, may be stored in the mass storage device 728, in the volatile memory 714, in the non-volatile memory 716, and/or on at least one non-transitory computer readable storage medium such as a CD or DVD which may be removable.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc., may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, or (7) A with B and with C. As used herein in the context of describing structures, components, items, objects and/or things, the phrase "at least one of A and B" is intended to refer to implementations including any of (1) at least one A, (2) at least one B, or (3) at least one A and at least one B. Similarly, as used herein in the context of describing structures, components, items, objects and/or things, the phrase "at least one of A or B" is intended to refer to implementations including any of (1) at least one A, (2) at least one B, or (3) at least one A and at least one B. As used herein in the context of describing the performance or execution of processes, instructions, actions, activities, etc., the phrase "at least one of A and B" is intended to refer to implementations including any of (1) at least one A, (2) at least one B, or (3) at least one A and at least one B. Similarly, as used herein in the context of describing the performance or execution of processes, instructions, actions, activities, etc., the phrase "at least one of A or B" is intended to refer to implementations including any of (1) at least one A, (2) at least one B, or (3) at least one A and at least one B.

As used herein, singular references (e.g., "a", "an", "first", "second", etc.) do not exclude a plurality. The term "a" or "an" object, as used herein, refers to one or more of that object. The terms "a" (or "an"), "one or more", and "at least one" are used interchangeably herein. Furthermore, although individually listed, a plurality of means, elements, or actions may be implemented by, e.g., the same entity or object. Additionally, although individual features may be included in different examples or claims, these may possibly be combined, and the inclusion in different examples or claims does not imply that a combination of features is not feasible and/or advantageous.

As used herein, unless otherwise stated, the term "above" describes the relationship of two parts relative to Earth. A first part is above a second part, if the second part has at least one part between Earth and the first part. Likewise, as used herein, a first part is "below" a second part when the first part is closer to the Earth than the second part. As noted above, a first part can be above or below a second part with one or more of: other parts therebetween, without other parts therebetween, with the first and second parts touching, or without the first and second parts being in direct contact with one another.

As used in this patent, stating that any part (e.g., a layer, film, area, region, or plate) is in any way on (e.g., positioned on, located on, disposed on, or formed on, etc.) another part, indicates that the referenced part is either in contact with the other part, or that the referenced part is above the other part with one or more intermediate part(s) located therebetween.

As used herein, connection references (e.g., attached, coupled, connected, and joined) may include intermediate members between the elements referenced by the connection reference and/or relative movement between those elements unless otherwise indicated. As such, connection references do not necessarily infer that two elements are directly connected and/or in fixed relation to each other. As used herein, stating that any part is in "contact" with another part is defined to mean that there is no intermediate part between the two parts.

Unless specifically stated otherwise, descriptors such as "first," "second," "third," etc., are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly within the context of the discussion (e.g., within a claim) in which the elements might, for example, otherwise share a same name.

As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

As used herein, "programmable circuitry" is defined to include (i) one or more special purpose electrical circuits (e.g., an application specific circuit (ASIC)) structured to perform specific operation(s) and including one or more semiconductor-based logic devices (e.g., electrical hardware implemented by one or more transistors), and/or (ii) one or more general purpose semiconductor-based electrical circuits programmable with instructions to perform specific functions(s) and/or operation(s) and including one or more semiconductor-based logic devices (e.g., electrical hardware implemented by one or more transistors). Examples of programmable circuitry include programmable microprocessors such as Central Processor Units (CPUs) that may execute first instructions to perform one or more operations and/or functions, Field Programmable Gate Arrays (FPGAs) that may be programmed with second instructions to cause configuration and/or structuring of the FPGAs to instantiate one or more operations and/or functions corresponding to the first instructions, Graphics Processor Units (GPUs) that may execute first instructions to perform one or more operations and/or functions, Digital Signal Processors (DSPs) that may execute first instructions to perform one or more operations and/or functions, XPUs, Network Processing Units (NPUs) one or more microcontrollers that may execute first instructions to perform one or more operations and/or functions and/or integrated circuits such as Application Specific Integrated Circuits (ASICs). For example, an XPU may be implemented by a heterogeneous computing system including multiple types of programmable circuitry (e.g., one or more FPGAs, one or more CPUs, one or more GPUs, one or more NPUs, one or more DSPs, etc., and/or any combination(s) thereof), and orchestration technology (e.g., application programming interface(s) (API(s)) that may assign computing task(s) to whichever one(s) of the multiple types of programmable circuitry is/are suited and available to perform the computing task(s).

As used herein integrated circuit/circuitry is defined as one or more semiconductor packages containing one or more circuit elements such as transistors, capacitors, inductors, resistors, current paths, diodes, etc. For example an integrated circuit may be implemented as one or more of an ASIC, an FPGA, a chip, a microchip, programmable circuitry, a semiconductor substrate coupling multiple circuit elements, a system on chip (SoC), etc.

Example methods, apparatus, systems, and articles of manufacture to improve power factor correction are disclosed herein. Further examples and combinations thereof include the following: Example 1 includes an apparatus comprising a first power factor correction capacitor coupled to a load via a power distribution system, a controller to control the first power factor correction capacitor, and an active harmonic filter coupled to the load via the power distribution system, the active harmonic filter including a second power factor correction capacitor.

Example 2 includes the apparatus of example 1, wherein the first power factor correction capacitor provides a first amount of reactive power to the load and the second power factor correction capacitor is to provide a second amount of reactive power to the load, the second amount being less than the first amount.

Example 3 includes the apparatus of example 1, further including a current transformer coupled to the power distribution system and the controller.

Example 4 includes the apparatus of example 3, wherein the controller is to control the first power factor correction capacitor based on a current measured by the current transformer.

Example 5 includes the apparatus of example 1, wherein the active harmonic filter is to mitigate harmonics that affect an input signal.

Example 6 includes the apparatus of example 5, wherein the active harmonic filter is to mitigate the harmonics by measuring deviations in the input signal provided to the load via the power distribution system, generating a signal based on the measured deviations, and adding the generated signal into the input signal to mitigate the deviations.

Example 7 includes the apparatus of example 1, wherein the controller is a first controller, further including a second controller coupled to the first controller and the active harmonic filter.

Example 8 includes the apparatus of example 7, wherein the second controller is to control the second power factor correction capacitor based on at least one of a current measurement or a voltage measurement at the power distribution system.

Example 9 includes the apparatus of example 8, wherein the second controller is to control the second power factor correction capacitor by determining a total current demand distortion ratio based on the current measurement, determining a total harmonic voltage distortion based on the voltage measurement, and control the second power factor correction capacitor based on at least one of the total current demand distortion ratio or the total harmonic voltage distortion.

Example 10 includes the apparatus of example 7, wherein the second controller is to control the first power factor correction capacitor based on at least one of a current measurement or a voltage measurement at the power distribution system.

Example 11 includes the apparatus of example 10, wherein the second controller is to control the first power factor correction capacitor by determining a reactive power of at least one of the first power factor correction capacitor or the second power factor correction capacitor based on the at least one of the current measurement or the voltage measurement, determine apparent power of a transformer based on the at least one of the current measurement or the voltage measurement, and control the first power factor correction capacitor based on a ratio of the reactive power to the apparent power of the transformer.

Example 12 includes the apparatus of example 1, wherein the power distribution system is to provide a current or a voltage from a utility service provider to the load.

Example 13 includes an apparatus comprising interface circuitry to obtain a current measurement and a voltage measurement at an input of a load, machine readable instructions, and programmable circuitry to at least one of instantiate or execute the machine readable instructions to determine a total current demand distortion ratio based on the current measurement, determine a total harmonic voltage distortion based on the voltage measurement, and control a power factor correction capacitor in an active harmonic filter based on at least one of the total current demand distortion ratio or the total harmonic voltage distortion.

Example 14 includes the apparatus of example 13, wherein the programmable circuitry is to determine a deviation in an input signal provided to the load, generating a signal based on the deviation, and adding the generated signal into the input signal to mitigate the deviation.

Example 15 includes the apparatus of example 13, wherein the programmable circuitry is to determine a reactive power of at least one of the first power factor correction capacitor or the second power factor correction capacitor equipment based on the at least one of the current measurement or the voltage measurement, determine apparent power of a transformer based on the at least one of the current measurement or the voltage measurement, and determine a ratio of the reactive power to the apparent power of the transformer.

Example 16 includes the apparatus of example 15, wherein the power factor correction capacitor is a first power factor correction capacitor, the programmable circuitry to control a second power factor correction capacitor outside of the active harmonic filter based on at least one of the ratio, the total current demand distortion ratio, or the total harmonic voltage distortion.

Example 17 includes the apparatus of example 13, wherein enabling the power factor correction capacitor increases a power factor of an input signal to the load.

Example 18 includes a non-transitory machine readable storage medium comprising instructions to cause programmable circuitry to at least determine a total current demand distortion ratio based on a current measurement of an input signal to a load, determine a total harmonic voltage distortion based on a voltage measurement of the input signal to the load, and control a power factor correction capacitor in an active harmonic filter based on at least one of the total current demand distortion ratio or the total harmonic voltage distortion.

Example 19 includes the non-transitory machine readable storage medium of example 18, wherein the instructions cause the programmable circuitry to control the power factor correction capacitor to control a power factor associated with the input signal.

Example 20 includes the non-transitory machine readable storage medium of example 18, wherein the power factor correction capacitor is a first power factor correction capacitor, the instructions to cause the programmable circuitry to control a second power factor correction capacitor outside of the active harmonic filter based on at least one of the total current demand distortion ratio, the total harmonic voltage distortion, or a ratio of (a) a reactive power of at least one of the first power factor correction capacitor or the second power factor correction capacitor to (b) an apparent power of a transformer that supplies the input signal.

From the foregoing, it will be appreciated that example systems, apparatus, articles of manufacture, and methods have been disclosed that improve power factor correction. Disclosed systems, apparatus, articles of manufacture, and methods improve systems by increasing the power factor associated with an input signal into a load. Examples disclosed herein include power factor correction capacitors and/or an active harmonic filter to increase the power factor and/or improve overall performance and/or efficiency of an input signal. Examples disclosed herein results, increase power efficiency, lower distribution of power loss, smaller voltage drops, increase in system capacitor, decreasing the hearing of equipment, increased life of equipment, and decrease in utility cost. Accordingly, disclosed systems, apparatus, articles of manufacture, and methods are accordingly directed to one or more improvement(s) in the operation of a machine such as a computer or other electronic and/or mechanical device.

The following claims are hereby incorporated into this Detailed Description by this reference. Although certain example systems, apparatus, articles of manufacture, and methods have been disclosed herein, the scope of coverage of this patent is not limited thereto. On the contrary, this patent covers all systems, apparatus, articles of manufacture, and methods fairly falling within the scope of the claims of this patent.

**Claims**

1. An apparatus comprising:

   a first power factor correction capacitor coupled to a load via a power distribution system;
   a controller to control the first power factor correction capacitor; and
   an active harmonic filter coupled to the load via the power distribution system, the active harmonic filter including a second power factor correction capacitor.

2. The apparatus of claim 1, wherein the first power factor correction capacitor provides a first amount of reactive power to the load and the second power factor correction capacitor is to provide a second amount of reactive power to the load, the second amount being less than the first amount.

3. The apparatus of claim 1, further including a current transformer coupled to the power distribution system and the controller.

4. The apparatus of claim 3, wherein the controller is to control the first power factor correction capacitor to output an amount of reactive power based on a current measured by the current transformer.

5. The apparatus of claim 1, wherein the active harmonic filter is to mitigate harmonics that affect an input signal.

6. The apparatus of claim 5, wherein the active harmonic filter is to mitigate the harmonics by:

   measuring deviations in the input signal provided to the load via the power distribution system;
   generating a signal based on the measured deviations; and
   adding the generated signal into the input signal to mitigate the deviations.

7. The apparatus of claim 1, wherein the controller is a first controller, further including a second controller coupled to the first controller and the active harmonic filter.

8. The apparatus of claim 7, wherein the second controller is to control the second power factor correction capacitor to output a first amount of reactive power based on at least one of a current measurement or a voltage measurement at the power distribution system.

9. The apparatus of claim 8, wherein the second controller is to control the second power factor correction capacitor by:

   determining a total current demand distortion ratio based on the current measurement;
   determining a total harmonic voltage distortion based on the voltage measurement; and
   control the second power factor correction capacitor to output the first amount of reactive power based on at least one of the total current demand distortion ratio or the total harmonic voltage distortion.

10. The apparatus of claim 7, wherein the second controller is to control the first power factor correction capacitor to output a first amount of reactive power based on at least one of a current measurement or a voltage measurement at the power distribution system.

11. The apparatus of claim 10, wherein the second controller is to control the first power factor correction capacitor by:

   determining a reactive power of at least one of the first power factor correction capacitor or the second power factor correction capacitor based on the at least one of the current measurement or the voltage measurement;
   determine apparent power of a transformer based on the at least one of the current measurement or the voltage measurement; and
   control the first power factor correction capacitor to output the first amount of reactive power based on a ratio of the reactive power to the apparent power of the transformer.

12. The apparatus of claim 1, wherein the power distribution system is to provide a current or a voltage from a utility service provider to the load.

13. A non-transitory machine readable storage medium comprising instructions to cause programmable circuitry to at least:

    determine a total current demand distortion ratio based on a current measurement of an input signal to a load; determine a total harmonic voltage distortion based on a voltage measurement of the input signal to the load; and control a power factor correction capacitor in an active harmonic filter based on at least one of the total current demand distortion ratio or the total harmonic voltage distortion.

14. The non-transitory machine readable storage medium of claim 13, wherein the instructions cause the programmable circuitry to control the power factor correction capacitor to control a power factor associated with the input signal.

15. The non-transitory machine readable storage medium of claim 13, wherein the power factor correction capacitor is a first power factor correction capacitor, the instructions to cause the programmable circuitry to control a second power factor correction capacitor outside of the active harmonic filter based on at least one of the total current demand distortion ratio, the total harmonic voltage distortion, or a ratio of (a) a reactive power of at least one of the first power factor correction capacitor or the second power factor correction capacitor to (b) an apparent power of a transformer that supplies the input signal.

100

POWER DISTRIBUTION SYSTEM
101      118 120 122 124

PH-A

UTILITY
SERVICE      PH-B                                                    LOAD
PROVIDER     PH-C                                                    102
             GND

PFC                  PFC                          PFC
CONTROLLER           CAPACITOR                     CAPACITOR
108                  110                           114

POWER FACTOR CORRECTION            ACTIVE HARMONIC FILTER
CIRCUITRY                          112
106

HYBRID
CORRECTION
CONTROLLER
116

POWER IMPROVEMENT CIRCUITRY
104

FIG. 1

PFC CONTROLLER
108

| INTERFACE CIRCUITRY 200 | CAPACITOR CONTROL CIRCUITRY 202 | USER INTERFACE 204 |
|---|---|---|

**FIG. 2**

HYBRID CORRECTION CONTROLLER
116

| INTERFACE CIRCUITRY 300 | CALCULATION CIRCUITRY 302 | DEVICE CONTROL CIRCUITRY 304 |
|---|---|---|

**FIG. 3**

VCH

+

−

~400

## FIG. 4A

~402

PLC

VCH

MISSING WAVE

DISTORTION

+

−

## FIG. 4B

VCH

CREATED ACTIVE
HARMONIC FILTER
(ADDED TO ELEC
NETWORK)

+

−

~404

(+)

## FIG. 4C

(V)CH

+

−

~406

(+)

## FIG. 4D

FIG. 5

FIG. 6

700

714

VOLATILE
MEMORY

INSTR
732

717

MEMORY
CONTROLLER

716

NON-VOLATILE
MEMORY

INSTR
732

BUS
718

728

MASS
STORAGE

722

INPUT
DEVICE(S)

720

INTERFACE
200

724

OUTPUT
DEVICE(S)

732

CODED
INSTRUCTIONS

726

NETWORK

712

PROGRAMMABLE
CIRCUITRY

| 200 | 202 | 204 |
| 206 | 210 | 300 |
| 302 | 304 | 306 |
| 310 | 400 | 402 |

LOCAL MEMORY
713

INSTR
732

**FIG. 7**

Europäisches
Patentamt

European
Patent Office

Office européen
des brevets

## EUROPEAN SEARCH REPORT

**Application Number**

EP 25 17 3265

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 10 027 120 B1 (ZAPATA JIAN CARLO DECENA [PH] ET AL) 17 July 2018 (2018-07-17) | 1-8,10, 12 | INV. H02J3/01 H02J3/18 |
| A | * figures 3,5B * | 9,11, 13-15 | |
| | ----- | | |
| X | CN 201 893 558 U (SIPING POWER SUPPLY COMPANY OF JILIN ELECTRIC POWER CO LTD) 6 July 2011 (2011-07-06) | 1,3-8, 10,12 | |
| A | * figure 1 * | 9,11, 13-15 | |
| | ----- | | |
| A | US 5 321 598 A (MORAN STEVEN A [US]) 14 June 1994 (1994-06-14) * figure 1 * | 1 | |
| | ----- | | |
| X | KR 102 363 916 B1 (NEXT ONE ENERGY [KR]; ROH SEUNG HEE [KR]) 17 February 2022 (2022-02-17) * paragraph [0043]; figure 7 * | 13,14 | |
| | ----- | | |

**TECHNICAL FIELDS SEARCHED (IPC)**

H02J

The present search report has been drawn up for all claims

| Place of search | Date of completion of the search | Examiner |
|---|---|---|
| Munich | 7 November 2025 | Hanisch, Thomas |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 25 17 3265

This annex lists the patent family members relating to the patent documents cited in the above-mentioned European search report.
The members are as contained in the European Patent Office EDP file on
The European Patent Office is in no way liable for these particulars which are merely given for the purpose of information.

07-11-2025

| Patent document cited in search report | | Publication date | Patent family member(s) | Publication date |
|---|---|---|---|---|
| US 10027120 | B1 | 17-07-2018 | NONE | |
| CN 201893558 | U | 06-07-2011 | NONE | |
| US 5321598 | A | 14-06-1994 | NONE | |
| KR 102363916 | B1 | 17-02-2022 | NONE | |

EPO FORM P0459

For more details about this annex : see Official Journal of the European Patent Office, No. 12/82